# EUROPEAN PATENT APPLICATION

(11) **EP 4 425 126 A1**
(43) Date of publication of application: **04.09.2024**
(21) Application number: 23159999.4
(22) Date of filing: 03.03.2023
(51) Int. Cl.: G01J 3/02, A61N 5/06, G01J 1/02, G01J 1/42

(54) **SYSTEM, METHOD AND COMPUTER PROGRAM FOR THE MEASUREMENT AND ANALYSIS OF MELANOPIC LIGHT QUANTITY**

(71) Applicant: Max-Planck-Gesellschaft zur Förderung der Wissenschaften e.V., 80539 München (DE)
(72) Inventor: SPITSCHAN, MANUEL, 72076 Tübingen (DE); TEUFEL, HARALD, 72768 Reutlingen (DE); WALZOG, JOSHI, 72070 Tübingen (DE)
(74) Representative: Richardt Patentanwälte PartG mbB

(57) **Abstract**

Disclosed is a system for the measurement and analysis of melanopic light quantity, comprising a wearable sensor device (100), comprising a sensor array (102), the sensor array (102) comprising sensors, the sensors comprising a melanopic light sensor and at least one of a UV light sensor and an accelerometer. A data processing unit determines a behavioral pattern comprising analyzing the time-series sensor data. If further determines a melanopic light quantity within a predefined time range of the sensor data of the melanopic light sensor, determines a behavioral element of the pattern which has assigned a respective one of the melanopic light quantities suitable to at least partially compensate for the difference between a desired value and the determined value of the melanopic light quantity, and outputs a signal comprising a behavioral recommendation based on the selected behavioral element.

## Description

### FIELD OF THE INVENTION

The invention relates to a system, method, and computer program for the measurement and analysis of melanopic light quantity.

### BACKGROUND

Light is a key driver of human physiology and behavior, affecting the biological clock, hormone production and sleep. The non-visual effects of light are due to a set of cells in the eye's retina called the intrinsically photosensitive retinal ganglion cells (ipRGCs) expressing the photo pigment melanopsin. The ipRGCs are quite unlike the cones and rods, which underlie vision and visual perception. They have a spectral sensitivity with maximum of around 490 nm. The spectral sensitivities of the ipRGCs were standardized in 2018 by the International Commission on Illumination (CIE) in the International Standard CIE S 026/E:2018. Importantly, illuminance [lux] follows a different spectral sensitivity compared to melanopic irradiance. While illuminance sensors are common, melanopic irradiance needs to be measured using custom filters or calculated from spectral measurements.

Miniaturized light dosimeters are known in the art. WO2021003344A1 describes a system for measuring the radiant exposure of electromagnetic radiation and includes an accumulation detection module which continuously monitors the electromagnetic radiation.

It is an objective to provide for a system, method, and computer program system for the measurement and analysis of melanopic light quantity.

### SUMMARY

The present invention relates to a system for the measurement and analysis of melanopic light quantity, comprising: a wearable sensor device, comprising a sensor array, the sensor array comprising sensors, the sensors comprising a melanopic light sensor and at least one of a UV light sensor and an accelerometer, wherein the melanopic light sensor is adapted to capture light sensor data at multiple wavelengths within the visible and optionally near infrared light spectrum, wherein the UV light sensor is adapted to capture light sensor data at specified wavelengths within the UV light spectrum; and a data recording unit, wherein the data recording unit is adapted to store time-series sensor data of each of the sensors. The system further comprises a data processing unit comprising a memory storing machine executable instructions, wherein the execution of the instructions causes the data processing unit to determine a behavioral pattern comprising analyzing the time-series sensor data of the melanopic light sensor and at least one of the UV light sensor and the accelerometer, the pattern comprising multiple behavioral elements, each element having assigned a respective melanopic light quantity as obtained from the sensor data of the melanopic light sensor for said element; determine a melanopic light quantity within a predefined time range of the sensor data of the melanopic light sensor; determine a selected behavioral element of the multiple behavioral elements which has assigned a respective one of the melanopic light quantities suitable to at least partially compensate for the difference between a desired value and the determined value of the melanopic light quantity; and output a signal comprising a behavioral recommendation based on the selected behavioral element.

Thus, this may be understood in that each behavioral element is assigned with the melanopic light quantity associated with the information on the previous behavior of the subject when it was exposed to this light quantity. Generally, the determined value of the melanopic light quantity may be understood as the total amount of melanopic light detected by the sensors over a specific period of time. The time period can be a floating period (e.g., the last N hours) or the time period can be a fixed period, e.g., N hours restarting each day at a determined time). Total amount of melanopic light may be understood as an e.g. optionally weighted sum of the melanopic light detected over said time period. Light detected in a certain time range of the day (e.g. morning) may be weighted more compared to other time ranges of the day.

The melanopic light quantity may include or be the melanopic irradiance. The melanopic irradiance may be defined as the irradiance at a given wavelength spectrum, with a peak wavelength of 480 nm. It may further or alternatively include photometric, colorimetric, and radiometric measurement parameters. An example for a photometric measurement parameter may be the photopic illuminance (lux). Examples for a colorimetric measurement parameter may be CIE xy chromaticity or correlated colour temperature (CCT). Examples for a radiometric measurement parameter may be total irradiance or spectral-band-wise irradiance.

In the following, without limiting the generality of the foregoing it is assumed that the light quantity is given by the melanopic light irradiance.

High doses of melanopic irradiance may disrupt sleep, suppress melatonin, and increase alertness. In The system, a behavioral pattern may be defined as an action that exposes a subject to a defined dose of melanopic irradiance. In this context, a subject may be a human or an animal, and a behavioral pattern may be defined but is not limited to for example being inside or outside of a building, for example being exposed to bright screens such as televisions, smart phone screens, computer screens, or for example being exposed to artificial sources of light, for example LED light, incandescent light bulbs, or halogen lights. In The system, the UV light sensor may be used for determining if a subject is subjected to natural sunlight or daylight. Furthermore, the accelerometer may be used for determining the movement patterns of the subject, which may be inside or outside the building. Generally, the accelerometer may be a 6- axis accelerometer (linear acceleration and angular velocity) to e.g. measure movement to be able to extract information when the light logger is worn.

The subject may carry or wear the sensor device. In this way it may be ensured that the sensor readings especially of the melanopic light sensor correspond to a real light exposure of the subject.

The predefined time range may be e.g., a most recent time range being in between 6 hours and 72 hours, preferably in between 8 hours and 24 hours.

Further, in this context, a behavioral recommendation may be defined as a concrete instruction. It may be defined as instruction for a certain action that is associated with the exposure to a specific dose of melanopic irradiance. For example, a behavioral recommendation may be the recommendation for the subject to physically go inside or outside of a building, to prevent or cancel the exposure to bright artificial screens or monitors, or to dim or turn off artificial light sources. The system may have the advantage to help the subject to develop a healthy sleep pattern, to fall asleep faster, to preserve and regulate physiological melatonin levels, to be well rested after sleep, and to be more vigilant during the daytime.

A further benefit may be that the subject is able to comprehend recommendations how to act to be subject to an optimal dose of melanopic irradiance in an intuitive manner. The behavioral recommendation is based on the subject's previous behavioral patterns, which are therefore already familiar to the subject. Instead of giving the subject a rather abstract recommendation "Exposure to 300 lux of light, maximum 650nm wavelength", the behavioral recommendation can be based on the subject's previous behavior and provide an easy-to-implement instruction for action that the subject will intuitively implement correctly. In other words, the system credibly assists the subject in enhancing his or her physical condition by providing him/her with readily comprehensible recommendations referring to concrete previous user actions in a thus guided process. The subject can follow the recommendation (instruction) much more precisely compared to a rather scientific recommendation mentioning concrete exposure values "300 lux" or even some general instructions like "expose yourself to sun". So, the subject is supported in optimizing his physical condition in a much more precise and reliable way. The behavioral recommendation may e.g. be tagged with a time information indicating a time when the subject conducted the respective behavior last time. This may assist the user in selecting the correct behavior. The system then automatically considers the user's compliance with the instructions in a kind of loop by continuously performing capturing of the sensor data, determining the melanopic light quantity, and determining the selected behavioral element. Thus, it is continuously checked to what extent the compensation for the difference between the desired value and the actualized determined value of the melanopic light quantity has taken place and, if necessary, a new output of a correspondingly changed signal with changed recommendation is carried out.

The signal may be output e.g. using a user interface that is either implemented in the wearable sensor device or in the data processing unit. Examples of user interfaces are an audio interface or a display.

Preferably, the system is configured to communicate wirelessly via Bluetooth (e.g., low energy) with a host computer, wherein the host computer comprises the data processing unit. By outsourcing the data processing unit to a host computer, miniaturization of the sensor device may be achieved, and a host computer with a high processing power may be used. This may further have the advantage to decrease the energy consumption of the wearable sensor device, as energy-intensive steps may not be carried out within the miniaturized system. Eventually, a small and portable wearable sensor device is achieved, wherein the data processing unit is not comprised within the device itself, but outside of the device, e.g., in a mobile telecommunication device.

The system may comprise a global navigation satellite system, GNSS, sensor, wherein the GNSS sensor is configured to provide as time series sensor data location data to the data processing unit, wherein the execution of the instructions causes the data processing unit to further use the location data for determining the behavioral pattern. As per the foregoing definition of the behavioral pattern, a behavioral pattern may include the information if the user is inside or outside a building which can, in an example, accurately be determined by the information obtained from the GNSS sensor. A different example for behavioral pattern that includes data from said GNSS sensor would be the type of activity the subject is currently performing, such as e.g., jogging or riding a bike, which may be determined by taking the velocity data extracted from the GNSS sensor and/or the accelerometer into account. Eventually, a detailed melanopic profile for different kinds of behavioral patterns may be developed.

Another usage scenario of the GNSS sensor data is to assign the behavioral elements with location information, e.g. a name of a location like a street or place like "xyz beach" which may further assist the subject to perform the recommended behavior as suggested since the recommendation is enriched with further information that helps the user to understand the recommendation.

The sensors of the sensor array may comprise the GNSS sensor. This could introduce independence from a host computer, as the foregoing advantages that are linked to the integration of the GNSS sensor may be directly available in the wearable sensor device. On the other hand, in case the sensor is part of the data processing unit, enrichment of the behavioral pattern with the GNSS sensor data may only be performed in case the data processing unit (e.g. a mobile phone) is close by the sensor device. However, since GNSS sensor data acquisition takes a lot of battery power, this may be beneficial in order to keep the battery size of the sensor device small and nevertheless have to possibility to enrich at least part of the data with the GNSS data.

Preferably, the execution of the instructions causes the data processing unit to forecast an expected amount of melanopic light to be sensed by the melanopic light sensor within a predetermined future time period, wherein the determination of the selected behavioral element further takes into account the expected amount of melanopic light as compensation for the difference between the desired value and the determined value of the amount of melanopic light. The forecast of the expected amount of melanopic light is e.g. based on the determined behavioral pattern. The forecast may be assuming that the subject follows his usual habits on the course of the day according to the behavioral pattern.

This prediction may have the advantage of predicting and forecasting the dose of melanopic irradiance to which the subject may be exposed. Because a prediction takes into account the likely course of melanopic dose exposure over a period of time, recommendations can be tailored accordingly. For example, if a subject is supposed to be expected to be exposed to sunlight in the next few hours anyway, and this is exactly what the subject needs to do, then the output of an appropriate signal can be omitted. If, on the other hand, it is predicted that the subject will not be exposed to sunlight in the next few hours, and exactly the opposite would be the necessary action for the subject, the subject could be informed accordingly by means of the signal. The predetermined future time period could be for example the remaining time of the day or a remaining time until the subject typically will go to sleep.

The data processing unit may access environmental light data, including solar irradiation data from weather or climate measurements or predictions. The data may be retrieved from respective databases or service providers over e.g. the internet, or part of the environmental data like an amount of hours of remaining daylight may be calculated by data processing device itself. The environmental light data may be used in the forecast. For the determination of the selected behavioral element the assigned (average) melanopic light quantities may be weighted or adjusted using the environmental light data.

In an example, in case for a certain outdoor activity reflected by a respective behavioral element that is expected to take place at a certain time (e.g. 6pm) the respective associated melanopic light quantity may be adjusted to a higher values during summer time (the days are longer) compared to winter time (it may already be dark at 6pm). A similar dynamic adjustment may be used with respect to actual weather data which can reflect a difference in melanopic light quantity of a behavioral element in case of bright sunlight compared to foggy drizzling conditions.

It is possible that the system provides in the signal information about the environmental light data. For example, the system may indicate that a certain number of hours of daylight are remaining for following the indicated behavioral recommendation. Thus, in conclusion, personalized light exposure patterns may be compared to environmental light data, including solar irradiation data from weather or climate measurements or predictions, to deliver personalized, localized behavioral recommendations. The system may indicate that participants are receiving a certain proportion of maximum light given the current availability daylight.

Certain types of activities, such as being inside a building and being exposed to artificial light sources, being outside a building and being exposed to natural light sources, or engaging in sports, including but not limited to jogging or cycling, may be associated with receiving certain doses of melanopic irradiance. In this way, specific behavioral patterns could be offered as a behavioral recommendation to achieve the predicted dose of melanopic irradiation within a predetermined future time period. Ultimately, this can be expected to lead to health-optimized doses of melanopic irradiance throughout the day, preventing excess or deficient melanopic irradiance.

The forecasting may be based on the time-series sensor data, the forecasting preferably comprising modeling the time-series sensor data using an autoregressive-moving-average model. Such kind of autoregressive moving average models may help to predict future trends and develop the forecast for the melanopic irradiance within the aforementioned examples. However, other tools for forecasting are known in the art and the disclosure is thus not limited to using an autoregressive-moving-average model.

The system could be communicatively coupled with a house automation system, wherein the system is adapted to send a command to the house automation system to switch light, the expected melanopic light quantity resulting from the switching of the light in the predetermined future time period, the signal further comprising the command.

In one example, a behavioral pattern could be the subject being inside the building, which could be determined by the sensor data as explained in the foregoing examples. Inside a building, the dose of melanopic irradiance can be controlled by switching, which includes turning on, turning off, dimming, or changing the color temperature of artificial lighting. This can be done by controlling the light sources with a switch or dimmer, for example. In this way, the dose of melanopic irradiance can be automatically controlled by the system to achieve a desired dose of melanopic irradiance (desired value of melanopic light quantity). In one example, the command may cause the home automation system to reduce the intensity or turn off the artificial lighting, which may reduce the dose of melanopic irradiance to which the subject is exposed. In another example, the command may cause the home automation system to increase the intensity or turn on the artificial lighting, Ih may increase the dose7ce7nopicnopic irradiance to which the subject is exposed. This may have the advantage of providing a convenient way to automatically control the dose of melanopic irradiance throughout the day when the subject is in the building, which may minimize the amount of signals to be output and which includes the behavioral recommendation based on the selected behavioral element.

For example, the sensitivity of the melanopic light sensor and/or the UV light sensor is adjustable, wherein the sensor device is adapted to adjust the sensor sensitivity such that a photometric reading of the sensor is obtained within a predefined range. Sudden high-magnitude changes in light intensity may lead to artifactual readings from the melanopic light sensor and/or the UV light sensor. The sensor integration time may therefore be controlled using an adaptive mechanism to account for the very high large differences in environmental illumination spanning multiple orders of magnitude.

An example to illustrate this is when the subject is wearing the sensor device attached to the head, e.g., via a headband or as an element of eyewear, and is inside a building. A sudden turn of the head, where the subject may be looking directly into an artificial light source after the turn, can cause large differences in the photometric reading of the sensor. If the photometric reading is already in the saturation range when the subject has not yet turned his or her head toward the artificial light source, this may result in unusable photometric readings after the subject turns his or her head. In another example, if the subject is outside a building, a sudden change in sunlight intensity can also result in very high (saturation) or very low sensor readings. In the case of a very low photometric reading, it may be impossible to interpret the reading because it may be difficult to distinguish from background noise, for example.

In view of such sudden changes in the lightning conditions the adjustment of the sensor sensitivity may be beneficial, so that sensor readings within the sensor specifications are obtained with a rather high likelihood. The adjusting of the sensor sensitivity may comprise an adjustment of the exposure time of the sensor. In general, the sensor could be operated in a range that leads to usable photometric readings even under the current illumination conditions, if these illumination conditions change in the usual way. The sensitivity could be adjusted in a regular way, e.g., at each sensor data capture.

Preferably, the determination of the selected behavioral element is specific for a user of the sensor device, the data processing unit further comprising an interface for receiving physiological factors of the user, wherein the execution of the instructions causes the data processing unit to determine the desired value of the melanopic light quantity taking into account the physiological factors. In an example, the physiological factors may comprise but are not limited to the age of the subject, the skin tone of the subject, the sex of the subject, or the eye color of the subject. Dependent on the physiological factors, the desired value of the melanopic light quantity may be determined, as certain characteristics may pose the need for either higher or lower quantities of melanopic light.

For example, the behavioral elements may differentiate between at least anyone of activity types comprising indoor and outdoor activity based on the light sensor data of the melanopic light sensor having been captured indoor or outdoor, the differentiating being performed using the light sensor data of the UV light sensor; activity locations of a user of the wearable sensor device based on the location data (e.g. using GNSS data as described above); sportive motion activities of a user of the wearable sensor device based on the sensor data from9 the accelerometer.

As per the aforementioned examples, indoor activities may not only be limited to the bare classification indoor or outdoor but may comprise but are not limited to watching television or playing video games (as could be identified via a specific frequency of changes in the light intensity or color as captured by the light sensors), performing indoor sports (identified via the respective movements detected using the accelerometer), while outdoor activities may comprise but are not limited to going for a walk, riding a bike, jogging, or skiing which all may be identified via the respective movements detected using the accelerometer or using GNSS sensor data. So, many of these indoor or outdoor activities may or may not be a sportive motion activity, which can be determined based on the sensor data from the accelerometer.

The differentiation between indoor and outdoor may be performed by using the light sensor data of the UV light sensor, as the sun emits UV light which is captured by the UV sensor and is usually absorbed by glass, so that only a minimal amount of UV light may be captured when a subject is inside of the building even if the room is illuminated by the sun through e.g., the windows. The activity type "indoor" may be determined comparing the UV sensor data (photometric reading) with a threshold that is representative for the respective time of the day and location where the UV sensor data is acquired. In a rather simplified example, in case e.g. at 1pm the photometric reading of the UV sensor is below a certain threshold, it is concluded that the sensor device is indoor.

In an example, these behavioral elements may be user-specific and if the system detects that a benefit regarding the melanopic light quantity may be achieved by going e.g., outside or inside, it may offer a behavioral recommendation to achieve said benefit.

The system may further be configured to determine whether the sensor device has been discarded by a user based on the sensor data from the accelerometer, wherein the light sensor data is disregarded for the determining of the behavioral pattern in case a determined likelihood of the sensor device being discarded is above a predetermined threshold. In an example, when the sensor device is not worn by the subject, the captured melanopic light quantity does not reliably reflect the light to which the subject was exposed during that time. An automatic detection if the subject is currently wearing the device may be a convenient way to filter out any irrelevant data, because the subject may not be required to automatically switch off the device during periods where the device may not be worn and used.

The system may further be configured to determine whether the sensor device has been moved by a user using a motorized transportation system based on the location data from the GNSS sensor, wherein the light sensor data is disregarded for the determining of the behavioral pattern in case a determined likelihood of the sensor device being moved by the user using a motorized transportation system is above a predetermined threshold. In case of using a motorized transportation system, the data accuracy of the light sensor readings may be low, frequently and unpredictably changing and/or subjected to artifacts. Hence, in an example, the device would automatically discard the data during a motorized transportation and may not offer any form of motorized transportation as a behavioral recommendation. This may be limited to such kind of motorized transportation within an enclosed space, including but not limited to driving a car, flying in an airplane, or riding a train. Other kinds of transportation, where the subject may not be within an enclosed space, including but not limited to driving an electric scooter or riding an electric bike, may still be determined as a behavioral pattern, e.g. based on the velocity of the transportation system.

Preferably, the system further comprises a physical button adapted for indicating a predefined behavioral element upon being pushed, the determining of the behavioral pattern further comprising analyzing the pushing of the physical button, the indicated predefined behavioral element upon being pushed preferably indicating the beginning or end of a resting phase of a user of the wearable sensor device. In an example, during a resting phase the subject may be sleeping. The dose of melanopic irradiance that is captured during that phase may still be relevant for determining a behavioral pattern as well as for giving behavioral recommendations. However, by means of the acceleration sensor the system may assume that a non-movement of the sensor device corresponds of a discarding of the sensor device. The usage of the physical button can avoid such a situation by manually indicating the correct usage of the sensor device avoiding disregarding of captures light sensor data.

For example, the wearable sensor device is battery powered and configured to communicate via a wireless connection with the data processing unit, wherein the data processing unit is comprised in a mobile telecommunication device. Especially when miniaturizing the system, there may be only limited space available for a battery and a microprocessor with a high processing power. In that case, operations that require high processing power may either be difficult to be carried out or may require too much power drawing the battery quickly empty. In an example, where the data processing unit is comprised in a smartphone, the wearable sensor device itself may still be miniaturized and communicate wirelessly with the smartphone via the Bluetooth (low energy) protocol, but such kind of operations that require high processing power, including but not limited to the detection of behavioral patterns, the prediction and forecasting, and the behavioral recommendations, may be carried out and/or displayed by the smartphone. This is the advantage of conserving energy within the wearable sensor device and allowing for the usage of smaller components with less processing power.

In general, a (portable) mobile telecommunication device may be a mobile phone, PDA, laptop, smartwatch.

In another example, the wearable sensor device comprises a mounting mechanism, wherein the mounting mechanism is adapted for mounting of the wearable sensor device on a helmet or on spectacle frames or a headband of a user of the sensor device. In an example, during activities inside of the building, the wearable sensor device may be mounted on the spectacle frames. In another example outside of the building and/or during sportive motion activities, the wearable sensor device may be mounted on a helmet, e.g. a bicycle or skiing helmet. Such kind of mounting mechanism may represent an easy and convenient way to wear and use the system. Since in general, the plane of measurements to determine physiologically relevant light exposure is the corneal plane, sensor measurements near the eye are beneficial for reliable data analysis and behavior recommendation.

For example, the melanopic light sensor may comprise at least 12, preferably in between 16 and 20 light channels operating at different respective wavelengths in the visible and optionally near IR range (410-740, optionally -940 nm), and/or the UV light sensor comprising in between 1 and 4, preferably 2 light channels operating at different respective UV wavelengths (330 nm and 365 nm). By having a high number of channels for the detection of the melanopic irradiance, a detailed analysis of the melanopic spectrum may be possible. The melanopic light has a spectral peak at approximately 480 nm but also includes light emitted within a broader wavelength range. Hence, more light channels that capture light at given wavelengths are beneficial in order to fully capture the melanopic light range. However, a higher number of light channels may lead to a higher energy consumption, higher costs, the need for higher processing power, and the need for more storage capacity while only slightly improving the data quality. In an example, 16 to 20 light channels represent an optimal range. In another example, preferably two UV light channels are sufficient to capture the UV light of the sun and to determine if a user may be inside or outside of the building, while keeping energy consumption, costs, the need for higher processing power, and the need for more storage capacity at a low level.

The data processing unit may further comprise at least one neural network processing module configured to provide the melanopic light quantity in response to receiving the melanopic light sensor data. Commonly, melanopic irradiance may be measured using custom filters or may be calculated from spectral measurements. In an example, the conversion of the readings from the melanopic light sensor to the melanopic light quantity may be carried out by a neural network processing module. A calibrated, digitally tunable light source may be used to feed the melanopic light sensor of the sensor array with a known quantity of melanopic light to train the neural network processing module.

In another aspect, a method for operating a system for the measurement and analysis of melanopic light quantity is disclosed. The system is comprising a wearable sensor device, comprising a sensor array, the sensor array comprising sensors, the sensors comprising a melanopic light sensor and at least one of a UV light sensor and an accelerometer, wherein the melanopic light sensor is adapted to capture light sensor data at multiple wavelengths within the visible and optionally near infrared light spectrum, wherein the UV light sensor is adapted to capture light sensor data at specified wavelengths within the UV light spectrum. The sensor device is comprising a data recording unit, wherein the data recording unit is adapted to store time-series sensor data of each of the sensors. The system further comprises a data processing unit configured to determine a behavioral pattern comprising analyzing the time-series sensor data of the melanopic light sensor and at least one of the UV light sensor and the accelerometer, the pattern comprising multiple behavioral elements, each element having assigned a respective melanopic light quantity as obtained from the sensor data of the melanopic light sensor for said element; determine a melanopic light quantity within a predefined time range of the sensor data of the melanopic light sensor; determine a selected behavioral element of the multiple behavioral elements which has assigned a respective one of the melanopic light quantities suitable to at least partially compensate for the difference between a desired value and the determined value of the melanopic light quantity; and output a signal comprising a behavioral recommendation based on the selected behavioral element. The method comprises: operating the wearable sensor device to capture sensor data of each of the sensors; controlling the data processing unit to perform the determining of the behavioral pattern, the melanopic light quantity, the selected behavioral element and the outputting of the signal.

In another aspect, a computer program comprising machine executable instructions for execution by one or more processors controlling a system for the measurement and analysis of melanopic light quantity is disclosed. The system is comprising a wearable sensor device, comprising a sensor array, the sensor array comprising sensors, the sensors comprising a melanopic light sensor and at least one of a UV light sensor and an accelerometer, wherein the melanopic light sensor is adapted to capture light sensor data at multiple wavelengths within the visible and optionally near infrared light spectrum, wherein the UV light sensor is adapted to capture light sensor data at specified wavelengths within the UV light spectrum. The sensor device is comprising a data recording unit, wherein the data recording unit is adapted to store time-series sensor data of each of the sensors. The system further comprises a data processing unit configured to determine a behavioral pattern comprising analyzing the time-series sensor data of the melanopic light sensor and at least one of the UV light sensor and the accelerometer, the pattern comprising multiple behavioral elements, each element having assigned a respective melanopic light quantity as obtained from the sensor data of the melanopic light sensor for said element; determine a melanopic light quantity within a predefined time range of the sensor data of the melanopic light sensor; determine a selected behavioral element of the multiple behavioral elements which has assigned a respective one of the melanopic light quantities suitable to at least partially compensate for the difference between a desired value and the determined value of the melanopic light quantity; and output a signal comprising a behavioral recommendation based on the selected behavioral element. Execution of the machine executable instructions causes the system to: operate the wearable sensor device to capture sensor data of each of the sensors; control the data processing unit to perform the determining of the behavioral pattern, the melanopic light quantity, the selected behavioral element, and the outputting of the signal.

It is understood that one or more of the aforementioned embodiments may be combined as long as the combined embodiments are not mutually exclusive.

### BRIEF DESCRIPTION OF THE DRAWINGS

In the following, examples are described in greater detail making reference to the drawings in which:
- Figure 1: is a schematic of a system for the measurement and analysis of melanopic light quantity, comprising a wearable sensor device and a data processing unit.
- Figure 2: is a flow chart aiming at the output of a behavioral recommendation.
- Figure 3: is a schematic of an example use case of the system of e.g. figure 1.

### DETAILED DESCRIPTION

In the following, similar elements are denoted by the same reference numerals.

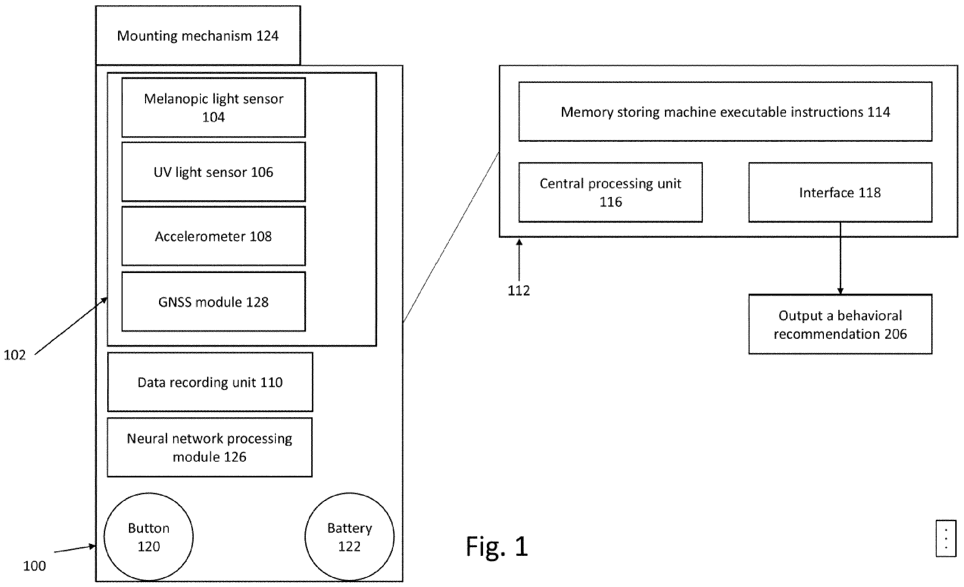

Figure 1 shows a system for the measurement and analysis of melanopic light quantity, comprising a wearable sensor device 100 and a data processing unit 112. The wearable sensor device 100 comprises of a sensor array 102 and the sensor array 102 comprises sensors, e.g., a melanopic light sensor 104 and at least one of a UV light sensor 106 and an accelerometer 108. Furthermore, it also includes a data recording unit 110, e.g., a flash memory.

The wearable sensor device 100 is communicatively coupled to a data processing unit 112, which comprises a memory storing machine executable instructions 114. The data processing unit 112 is controlled by a central processing unit 116. It further comprises an interface 118 that is adapted to output a signal comprising a behavioral recommendation 206. The system may optionally comprise a physical button 120, and/or a battery 122, and/or a mounting mechanism 124, and/or a neural network processing module 126, and/or a GNSS module 128. The physical button 120 and/or the neural network processing module 126 and/or the GNSS module 128 may be comprised in the data processing unit 112 or the sensor device 100.

The mounting mechanism may provide an easy and convenient way to wear the device during the day e.g., during office work or during sports, by mounting it on a spectacle frame, a headband, or a helmet.

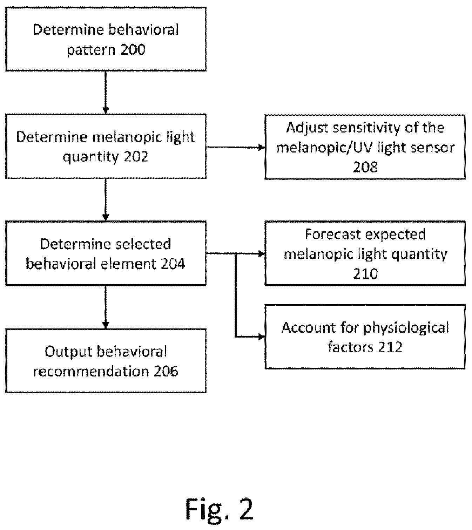

The functionality of the modules is explained using the flow chart of figure 2. In the following it is assumed that data was acquired by the sensors of the array 102 and stored as time-series sensor data. Time-series sensor data may be understood as the sensor data being stored in the data recording unit, tagged or associated with a respective time at which the data was captured or acquired.

In step 200, a behavioral pattern is determined by the data processing unit from the time-series data of the sensors. For example, the subject or the user of the device has certain habits, such as a riding a bike, going for a walk, or jogging outside of an enclosed space. The determination that these activities are performed outside of an enclosed space can be performed by the time-series data from the UV light sensor 108 and/or the GNSS module 128. The nature of these activities, for example the activity being a recreational activity or a sportive motion, can be determined by the time-series data from the accelerometer 108 and/or the GNSS module 128.

As an example for step 200, the data processing unit may recognize by the time-series data from the UV light sensor that the subject is outside of an enclosed space, and by the time-series data from the accelerometer that the subject is moving faster than the speed of walking or jogging, but not as fast as the speed within a motorized vehicle. This determination may further be backed up by the time-series data from the GNSS module 128 by e.g., analyzing the track i.e., the route the subject has taken, or the speed at which the subject has been moving, supplementing the information from the accelerometer 108. The data processing unit may conclude that the subject is riding a bike (which assumption may further be supported by a movement pattern detected via the accelerometer 108 that is typical for riding a bike). During the activity, light sensor data of the melanopic light sensor is captured and stored associated with the data from the UV light sensor, accelerometer etc.

The light sensor data of the melanopic light sensor may then be quantified and associated with the detected activity and time and duration of activity, e.g. riding the bike. In an example, after the behavior "riding a bike" has been recorded at least three times, the mean of the received melanopic light quantity can be calculated and associated with the respective behavioral element as part of the subject's behavioral pattern.

Then, in step 202, the melanopic light quantity that a subject was subjected to within a predefined time range is determined by the data processing unit 112. The predefined time range may be e.g., a (most) recent time range being in between 6 hours and 72 hours, preferably in between 8 hours and 24 hours.

In step 204, the data processing unit 112 determines a single behavioral element that is included in the behavioral pattern of step 200 to optimize the melanopic light quantity received by the subject that was determined in step 204. As outlined in step 200, there may be multiple behavioral elements available that are routinely carried out by the subject which are all independently associated with a respective mean quantity of melanopic light which is expected to be received by the subject while carrying out the behavior indicated via that selected behavioral element. Some behavioral elements may be associated with high quantities of melanopic light while others may be associated with low quantities of melanopic light. In addition, the data processing unit may take the time of day into account, because the example "riding a bike" presented in step 200 may not be a viable option in the evening or at night when it is dark outside. In addition, the associated quantity of melanopic light to a behavioral pattern may also be dependent on the time of the day.

As an example for step 204, the data processing unit may have determined the behavioral pattern "riding a bike" during the daytime outside of an enclosed space in step 200.

Furthermore, the data processing unit may have determined in step 202 that the subject has not yet received an adequate quantity of melanopic light in range between the morning and noon of the day (e.g. in the past 6 hours). Hence, it may determine the behavioral element "riding a bike" as a suitable selection of the behavior to be offered to the subject, as it may have health-related benefits for the subject to be exposed to higher quantities of melanopic light during the afternoon.

In step 206, the single determined behavioral element of step 204 is output via the interface 118. In an example, the interface 118 may be a small display that is integrated into the unit, or, in the case the data processing unit is an external device such as a smartphone, the recommendation can be a notification on such device.

Optional steps include the adjustment of the sensitivity of either of the UV light and melanopic light sensor in step 208. To optimally determine the melanopic light quantity in step 202, a frequent adjustment of the sensor's sensitivity may be necessary. In general, the sensor could be operated in a range that leads to usable photometric readings under current illumination conditions, if these illumination conditions change in the usual way. One possibility would be to maintain the sensitivity of the respective sensors in such a range that the respective photometric readings are within the first 10%-20% of the maximal photometric reading of the respective sensor. The sensitivity could be adjusted in a regular way, e.g., at each sensor data capture.

Another optional step would be to forecast the expected melanopic light quantity in step 210. In that way, by forecasting a melanopic light quantity value that the user will be subjected to during a predefined next time span (future time period), this may help supporting the decision which behavioral element is selected in step 204 or for how long it should be recommended in step 206. In the present example discussed above, in case the forecast results in a probability over 80% that the subject will expose himself/herself within the next 6 hours to sufficient sunlight according his/her usual behavior, outputting the recommendation of "riding a bike now" can be omitted.

Optional step 212 may further assist in improving the quality of the determination of selected behavioral elements by taking into account physiological factors of the subject, such as age, skin tone, gender, or eye color. Depending on the physiological factors, the desired (optimal) value of the amount of melanopic light may vary, as certain characteristics may require either higher or lower amounts of melanopic light.

A possible purpose of the physical button 120 could be to accurately signal rest periods of the subject wearing the sensor device 100. When the subject is resting and the system is programmed to interpret a lack of movement of the sensor device for a period of time as the sensor device being discarded, resting phases, such as at noon when the subject is exposed to natural light, may not be taken into account with respect to the subject's exposure to sunlight during the resting phase. By providing the button 120, the subject could indicate the beginning and the end of the resting period, thus ensuring that the subject's exposure to sunlight during the resting period is correctly considered (recorded) for the evaluation of the determined value of the melanopic light quantity.

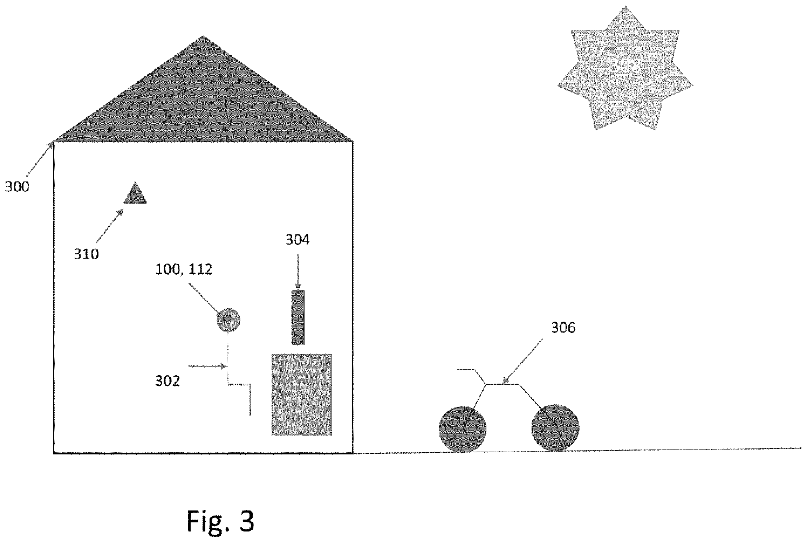

Figure 3 is a schematic of an example situation for the usage of the wearable sensor device 100. A user 302, also referred to as a subject, wearing and using the wearable sensor device 100 is located inside the enclosed space of a building 300 and thus, the UV light sensor 106 of the sensor array 102 is not capturing the UV light rays from the sun 308. Furthermore, the user 302 is working with and looking at a bright illuminated screen 304.

The data processing unit 112 of the device is then executing the steps as outlined in figure 2. In step 202, the data processing unit determines the melanopic light quantity that the subject was exposed to within a defined time period in e.g. the past 6 hours. In order to optimize the melanopic light quantity to which the subject should have been exposed during that time, a respective behavioral element is selected in step 204. One behavioral element of the behavioral pattern as determined in step 200 comprises being outside of the enclosed space 300 and use the bike while being subjected to natural sunlight from the sun 308. This activity (behavioral element) is associated with a representative mean melanopic light quantity as described above.

The determined selected behavioral element of step 204 is then offered as a recommendation to the subject using a respective signal via the interface 118 in step 206. In the present example, the output may be the recommendation of the behavioral element "bike riding" as a message.

Examples for behavioral elements of the pattern are elements such as "going for a walk", "turning off artificial light sources", "turning on artificial light sources", "being in front of the screen", and "jogging", from which the data processing unit may have selected "bike riding" as the most suitable one for the example situation at an example time of the day. The example recommendation may aim at exposing the user to higher melanopic light quantities during the daytime than he or she would receive while being inside of an enclosed space, aiming at having health-related effects such as better sleep and physiological melatonin production.

Further shown in figure 3 is a light bulb 310 which may be controlled by the signal provided in step 206. For example, the light bulb 310 may be part of a home automation system. The system (e.g. the data processing unit 112) may send the signal to the home automation system or directly to the light bulb commanding the light bulb to switch color temperature, light intensity, turn on or off etc. This may assist the subject in compensating for the difference between the desired value and the determined value of the melanopic light quantity e.g. in case the suggested behavioral recommendation based on the selected behavioral element is not sufficient to compensate for said difference.

While the invention has been illustrated and described in detail in the drawings and foregoing description, such illustration and description are to be considered illustrative or exemplary and not restrictive; the invention is not limited to the disclosed embodiments.

As will be appreciated by one skilled in the art, aspects of the present invention may be embodied as a apparatus, method, computer program or computer program product. Accordingly, aspects of the present invention may take the form of an entirely hardware embodiment, an entirely software embodiment (including firmware, resident software, microcode, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon. A computer program comprises the computer executable code"or "program instruct"ons".

Any combination of one or more computer readable medium(s) may be utilized. The computer readable medium may be a computer readable signal medium or a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magneto-optical disk, and the register file of the processor. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example a data may be retrieved over a modem, over the internet, or over a local area network. Computer executable code embodied on a computer readable medium may be transmitted using any appropriate medium, including but not limited to wireless, wireline, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electromagnetic, optical, or any suitable combination thereof. A computer readable signal medium may be any computer readable medium that is not a computer readable storage medium and that can communicate, propagate, or transport a program for use by or in connection with an instruction execution system, apparatus, or device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as "h" "C" programming language or similar programming languages and compiled into machine executable instructions. In some instances the computer executable code may be in the form of a high level language or in a pre-compiled form and be used in conjunction with an interpreter which generates the machine executable instructions on the fly.

The computer executable code may execute entirely on the 'ser's computer (e.g. data processing unit), partly on the 'ser's computer, as a stand-alone software package, partly on the 'ser's computer and partly on a remote computer or entirely on the remote computer or server. In the latter scenario, the remote computer may be connected to the 'ser's computer through any type of network, including a local area network (LAN) or a wide area network (WAN), or the connection may be made to an external computer (for example, through the Internet using an Internet Service Provider).

Generally, the program instructions can be executed on one processor or on several processors. In the case of multiple processors, they can be distributed over several different entities like in the present case the sensor device and the data processing unit. Each processor could execute a portion of the instructions intended for that entity. Thus, when referring to a system or process involving multiple entities, the computer program or program instructions are understood to be adapted to be executed by a processor associated or related to the respective entity.

Aspects of the present invention are described with reference to flowchart illustrations and/or block diagrams of methods, apparatus (systems) and computer program products according to embodiments of the invention. It will be understood that each block or a portion of the blocks of the flowchart, illustrations, and/or block diagrams, can be implemented by computer program instructions in form of computer executable code when applicable. It is further under stood that, when not mutually exclusive, combinations of blocks in different flowcharts, illustrations, and/or block diagrams may be combined. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

### REFERENCE SIGNS LIST

- 100: wearable sensor device
- 102: sensor array
- 104: melanopic light sensor
- 106: UV light sensor
- 108: accelerometer
- 110: data recording unit
- 112: data processing unit
- 114: memory storing machine executable instructions
- 116: central processing unit
- 118: interface
- 120: button
- 122: battery
- 124: mounting mechanism
- 126: neural network processing module
- 200: determine a behavioral pattern
- 202: determine a melanopic light quantity
- 204: determine a selected behavioral element
- 206: output a behavioral recommendation
- 300: enclosed space
- 302: user/subject
- 304: screen
- 306: bike
- 308: sun with natural sunlight
- 310: light bulb

## Claims

1. A system for the measurement and analysis of melanopic light quantity, comprising:
a wearable sensor device (100), comprising
∘ a sensor array (102), the sensor array (102) comprising sensors, the sensors comprising a melanopic light sensor (104) and at least one of a UV light sensor (106) and an accelerometer (108), wherein the metanopic light sensor (104) is adapted to capture light sensor data at multiple wavelengths within the visible light spectrum, wherein the UV light sensor is adapted to capture light sensor data at specified wavelengths within the UV light spectrum; and
∘ a data recording unit (110), wherein the data recording unit (110) is adapted to store time-series sensor data of each of the sensors;
a data processing unit (112) comprising a memory storing machine executable instructions, wherein the execution of the instructions causes the data processing unit to
∘ determine a behavioral pattern comprising analyzing the time-series sensor data of the melanopic light sensor and at least one of the UV light sensor and the accelerometer, the pattern comprising multiple behavioral elements, each element having assigned a respective melanopic light quantity as obtained from the sensor data of the melanopic light sensor for said element;
∘ determine a melanopic light quantity within a predefined time range of the sensor data of the melanopic light sensor;
∘ determine a selected behavioral element of the multiple behavioral elements which has assigned a respective one of the melanopic light quantities suitable to at least partially compensate for the difference between a desired value and the determined value of the melanopic light quantity; and
∘ output a signal comprising a behavioral recommendation based on the selected behavioral element.

2. The system of claim 1, wherein the system is configured to communicate wirelessly via Bluetooth low energy with a host computer, wherein the host computer comprises the data processing unit of claim 1.
The system of any of the previous claims, wherein the system comprises a global navigation satellite system, GNSS, sensor, wherein the GNSS sensor is configured to provide as time series sensor data location data to the data processing unit, wherein the execution of the instructions causes the data processing unit to further use the location data for determining the behavioral pattern, wherein optionally the sensors of the sensor array (102) comprise the GNSS sensor.

3. The system of any of the previous claims, wherein the execution of the instructions causes the data processing unit to forecast an expected melanopic light quantity to be sensed by the melanopic light sensor within a predetermined future time period, the determining of the selected behavioral element further taking into account the expected melanopic light quantity as a compensation for the difference between the desired value and the determined value of the melanopic light quantity, the forecasting being e.g. based on the time-series sensor data, the forecasting preferably comprising modeling the time-series sensor data using an autoregressive-moving-average model.

4. The system of claim 4, wherein the system is communicatively coupled with a house automation system, wherein the system is adapted to send a command to the house automation system to switch light, the expected melanopic light quantity resulting from the switching of the light in the predetermined future time period, the signal further comprising the command.

5. The system of any of the previous claims, wherein the sensitivity of the melanopic light sensor and/or the UV light sensor is adjustable, wherein the sensor device is adapted to adjust the sensor sensitivity such that a photometric reading of the sensor is obtained within a predefined range, wherein optionally the adjusting of the sensor sensitivity is comprising an adjustment of the exposure time of the sensor.

6. The system of any of the previous claims, the determining of the selected behavioral element being specific for a user of the sensor device, the data processing unit further comprising an interface for receiving physiological factors of the user, wherein the execution of the instructions causes the data processing unit to determine the desired value of the melanopic light quantity taking into account the physiological factors.

7. The system of any of the previous claims, the behavioral elements differentiating between at least anyone of
∘ activity types comprising indoor and outdoor activity based on the light sensor data of the melanopic light sensor having been captured indoor or outdoor, the differentiating being performed using the light sensor data of the UV light sensor;
∘ activity locations of a user of the wearable sensor device (100) based on the location data;
∘ sportive motion activities of a user of the wearable sensor device (100) based on the sensor data from the accelerometer.

8. The system of any of the previous claims, the system further being configured to determine whether the sensor device has been discarded by a user based on the sensor data from the accelerometer, wherein the light sensor data is disregarded for the determining of the behavioral pattern in case a determined likelihood of the sensor device being discarded is above a predetermined threshold.

9. The system of any of the previous claims 3-12, the system further being configured to determine whether the sensor device has been moved by a user using a motorized transportation system based on the location data from the GNSS sensor, wherein the light sensor data is disregarded for the determining of the behavioral pattern in case a determined likelihood of the sensor device being moved by the user using a motorized transportation system is above a predetermined threshold.

10. The system of any of the previous claims, further comprising a physical button adapted for indicating a predefined behavioral element upon being pushed, the determining of the behavioral pattern further comprising analyzing the pushing of the physical button, the indicated predefined behavioral element upon being pushed preferably indicating the beginning or end of a resting phase of a user of the wearable sensor device (100).

11. The system of any of the previous claims, wherein the wearable sensor device (100) comprises a mounting mechanism, wherein the mounting mechanism is adapted for mounting of the wearable sensor device (100) on a helmet, a headband or on spectacle frames of a user of the sensor device.

12. The system of any of the previous claims,
∘ the melanopic light sensor comprising at least 12, preferably in between 16 and 20 light channels operating at different respective wavelengths, and/or
∘ the UV light sensor comprising in between 1 and 4, preferably 2 light channels operating at different respective wavelengths.

13. The system of any of the previous claims, the data processing unit further comprising at least one neural network processing module configured to provide the melanopic light quantity in response to receiving the melanopic light sensor data.

14. A method of operating a system for the measurement and analysis of melanopic light quantity, the system comprising
a wearable sensor device (100), comprising
∘ a sensor array (102), the sensor array (102) comprising sensors, the sensors comprising a melanopic light sensor and at least one of a UV light sensor and an accelerometer, wherein the melanopic light sensor is adapted to capture light sensor data at multiple wavelengths within the visible light spectrum, wherein the UV light sensor is adapted to capture light sensor data at specified wavelengths within the UV light spectrum; and
∘ a data recording unit, wherein the data recording unit is adapted to store time-series sensor data of each of the sensors;
a data processing unit configured to
∘ determine a behavioral pattern comprising analyzing the time-series sensor data of the melanopic light sensor and at least one of the UV light sensor and the accelerometer, the pattern comprising multiple behavioral elements, each element having assigned a respective melanopic light quantity as obtained from the sensor data of the melanopic light sensor for said element;
∘ determine a melanopic light quantity within a predefined time range of the sensor data of the melanopic light sensor;
∘ determine a selected behavioral element of the multiple behavioral elements which has assigned a respective one of the melanopic light quantities suitable to at least partially compensate for the difference between a desired value and the determined value of the melanopic light quantity; and
∘ output a signal comprising a behavioral recommendation based on the selected behavioral element,
the method comprising:
∘ operating the wearable sensor device (100) to capture sensor data of each of the sensors;
∘ controlling the data processing unit to perform the determining of the behavioral pattern, the melanopic light quantity, the selected behavioral element and the outputting of the signal.

15. A computer program comprising machine executable instructions for execution by one or more processors controlling a system for the measurement and analysis of melanopic light quantity, the system comprising
a wearable sensor device (100), comprising
∘ a sensor array (102), the sensor array (102) comprising sensors, the sensors comprising a melanopic light sensor and at least one of a UV light sensor and an accelerometer, wherein the melanopic light sensor is adapted to capture light sensor data at multiple wavelengths within the visible light spectrum, wherein the UV light sensor is adapted to capture light sensor data at specified wavelengths within the UV light spectrum; and
∘ a data recording unit, wherein the data recording unit is adapted to store time-series sensor data of each of the sensors;
a data processing unit configured to
∘ determine a behavioral pattern comprising analyzing the time-series sensor data of the melanopic light sensor and at least one of the UV light sensor and the accelerometer, the pattern comprising multiple behavioral elements, each element having assigned a respective melanopic light quantity as obtained from the sensor data of the melanopic light sensor for said element;
∘ determine a melanopic light quantity within a predefined time range of the sensor data of the melanopic light sensor;
∘ determine a selected behavioral element of the multiple behavioral elements which has assigned a respective one of the melanopic light quantities suitable to at least partially compensate for the difference between a desired value and the determined value of the melanopic light quantity; and
∘ output a signal comprising a behavioral recommendation based on the selected behavioral element,
wherein execution of the machine executable instructions causes the system to:
o operate the wearable sensor device (100) to capture sensor data of each of the sensors;
α control the data processing unit to perform the determining of the behavioral pattern, the melanopic light quantity, the selected behavioral element and the outputting of the signal.
